# EUROPEAN PATENT SPECIFICATION

(11) **EP 4 560 626 B1**
(45) Date of publication and mention of the grant of the patent: **02.12.2026**
(21) Application number: 24208546.2
(22) Date of filing: 24.10.2024
(51) Int. Cl.: G10L 21/00, G01H 7/00, H04M 3/56, H04S 7/00

(54) **METHOD AND SYSTEM FOR ENHANCING AUDIO FIDELITY IN A VIRTUAL TELECONFERENCING ENVIRONMENT**
VERFAHREN UND SYSTEM ZUR VERBESSERUNG DER AUDIOWIEDERGABETREUE IN EINER VIRTUELLEN TELEKONFERENZUMGEBUNG
PROCÉDÉ ET SYSTÈME POUR AMÉLIORER LA FIDÉLITÉ AUDIO DANS UN ENVIRONNEMENT DE TÉLÉCONFÉRENCE VIRTUEL

(30) Priority: 21.11.2023 US 202318516063
(43) Date of publication of application: 28.05.2025
(73) Proprietor: Varjo Technologies Oy, 00100 Helsinki (FI)
(72) Inventor: van Mourik, Jelle, 00100 Helsinki (FI)
(74) Representative: Moosedog Oy

(56) References cited:
- US-A1- 2015 092 950
- US-A1- 2021 329 381
- GUPTA RISHABH ET AL: "Augmented/Mixed Reality Audio for Hearables: Sensing, control, and rendering", IEEE SIGNAL PROCESSING MAGAZINE, IEEE, USA, vol. 39, no. 3, 6 May 2022 (2022-05-06), pages 63 - 89, XP011907407, ISSN: 1053-5888, DOI: 10.1109/MSP.2021.3110108

## Description

### TECHNICAL FIELD

The present disclosure relates to methods for enhancing audio fidelity in a virtual teleconferencing environment. The present disclosure also relates to systems for enhancing audio fidelity in a virtual teleconferencing environment.

### BACKGROUND

With advancements in evolving technologies such as immersive extended-reality (XR) technologies, the demand for creating a realistic and immersive XR audio experience has been increasing. While creating a visual experience for a user in an XR environment is a critical aspect, sound plays an equally essential role in delivering an immersive and believable experience for the user in the XR environment and in complementing said visual experience. The presence of high-quality sounds in the XR environment is important for guiding the user's attention and enhancing the emotional engagement of the user in the XR environment.

However, existing systems and techniques for creating the XR audio experience are associated with several limitations. Some existing systems and techniques naively utilize as-it-is recording of a sound collected from the perspective of a user present in an XR environment for other users present in the same XR environment, irrespective of different positions of the other users in the XR environment. In such a case, spatial information of the sound present in the recording is lost, and the other users do not perceive a location, a directionality, and a movement of the sound in the XR environment. As a result, the audio and viewing experiences of other users become highly unrealistic and non-immersive.

In a United States patent document 2015/0092950 A1(Doh-suk Kim; "Matching Reverberation in Teleconferencing Environments"; assigned to Dolby Laboratories Licensing Corp), there is disclosed a system and method of matching reverberation in teleconferencing environments. When the two ends of a conversation are in environments with differing reverberations, the method filters the reverberation so that when both signals are output at the near end the reverberations match. In this manner, the user does not perceive an annoying difference in reverberations, and the user experience is improved.

Therefore, in light of the foregoing discussion, there exists a need to overcome the aforementioned drawbacks associated with existing equipment and techniques for creating an XR audio experience.

### SUMMARY

The aim of the present disclosure is to provide a method and a system for enhancing audio fidelity in a virtual teleconferencing environment. The aim of the present disclosure is achieved by a method and a system for enhancing the audio fidelity in the virtual teleconferencing environment with an improved spatial audio representation by reconstructing an AR teleconferencing. Therefore, the method and the system of the present disclosure aims at improving the perception of the users within a shared augmented reality (AR) teleconferencing environment, as defined in the appended independent claims to which reference is made. Advantageous features are set out in the appended dependent claims.

Throughout the description and claims of this specification, the words *"comprise", "include", "have",* and *"contain"* and variations of these words, for example, *"comprising"* and *"comprises",* mean *"including but not limited to",* and do not exclude other components, items, integers, or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates steps of a method for enhancing audio fidelity in a virtual teleconferencing environment, in accordance with an embodiment of the present disclosure;
FIG. 2 is an illustration of a block diagram of an architecture of a system for enhancing audio fidelity in a virtual teleconferencing environment, in accordance with an embodiment of the present disclosure;
FIG. 3 is an illustration of an exemplary sequence diagram for enhancing audio fidelity in a virtual teleconferencing environment, in accordance with an embodiment of the present disclosure; and
FIG.4 is a graphical illustration depicting the behaviour of the sound, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a method for enhancing audio fidelity in a virtual teleconferencing environment, the method comprising:
recording, by a microphone, a first audio signal from a first room, characterised in that,
performing, by a processor, room impulse response [RIR] analysis for the first room using the first audio signal to determine at least one of a direct sound component, an early reflections component and a late reverberation component, wherein performing [RIR] analysis comprises a plurality of [RIR] analyses performed in real time to collate [RIR] component measurements for determining the direct sound component, the early reflections component and the late reverberation component therefrom;
extracting, by the processor, at least the late reverberation component from the determined [RIR] components;
recording, by a microphone, a second audio signal from a second room physically spaced apart from the first room;
de-reverberating, by the processor, the second audio signal to remove reverberation from the recorded second audio signal in the second room in order to obtain a clear and direct representation of the original audio by minimizing the impact of the acoustics of the second room;
convolving, by the processor, the de-reverberated second audio signal with at least the late reverberation component of the first audio signal to form a third audio signal, wherein the third audio signal enhances audio fidelity of the second audio signal by replicating acoustic characteristics of the first room; and
playing, by the processor, the third audio signal in the first room and abstain playing in the second room, wherein the virtual teleconferencing environment is generated based on the first room to act as an audio source for the second audio signal.

In a second aspect, an embodiment of the present disclosure provides a system for enhancing audio fidelity in a virtual teleconferencing environment, the system comprising:
a plurality of headset associated with a plurality of rooms; and
a processor communicably coupled to the plurality of headset, the processor configured to:
   receive a first audio signal recorded by a first headset of the plurality of headset, the first headset associated with a first room, characterised in that,
   perform room impulse response [RIR] analysis for the first room using the first audio signal to determine at least one of a direct sound component, an early reflections component and a late reverberation component;
   perform a plurality of [RIR] analyses in real time to collate [RIR] component measurements for determining the direct sound component, early reflections component and late reverberation component;
   extract at least the late reverberation component from the determined [RIR] components;
   receive a second audio signal recorded by a second headset of the plurality of headset, the second headset associated with a second room physically spaced apart from the first room,
   de-reverberate the second audio signal to remove reverberation from the recorded second audio signal in the second room in order to obtain a clear and direct representation of the original audio by minimizing the impact of the acoustics of the second room;
   convolve the de-reverberated second audio signal with at least the late reverberation component of the first audio signal to form a third audio signal, wherein the third audio signal enhances audio fidelity of the second audio signal by replicating acoustic characteristics of the first room, and
   play the third audio signal in the first room and abstain from playing in the second room, wherein the virtual teleconferencing environment is generated based on the first room to act as an audio source for the second audio signal.

The present disclosure provides the aforementioned system and the aforementioned method for enhancing the audio fidelity in a virtual teleconferencing environment. The recording and extraction of the at least late reverberation component from the first audio signal from the determined RIR components are used to capture the acoustic ambience of the first room with an enhanced accuracy and reliability. Furthermore, the convolution of the de-reverberated second audio signal with at least the late reverberation component of the first audio signal to form a third audio signal is used to realistically mimic the acoustic qualities of the first room, thereby providing an improved immersive virtual teleconferencing experience to the user. Moreover, the replication of acoustic characteristics, especially late reverberation, adds a layer of realism, making the users in the second room feel as if the corresponding users are physically present in the first room. Moreover, the utilization of RIR analysis allows the aforementioned system and the aforementioned method to provide a comprehensive understanding of the acoustic components in the first room accurately and reliably by avoiding unnecessary elements while ensuring synchronization and coherence. As a result, the aforementioned system and the aforementioned method are used to provide a highly realistic and immersive audio experience in virtual teleconferencing environments, leading to improved audio fidelity and a more authentic communication atmosphere for the user. In addition, the enhancement the overall quality of the virtual teleconferencing environment is achieved without using any room acoustic simulation methods (e.g., image source method (ISM), ray tracing and the like methods) that further reduces the computational complexity and the overall processing time. This, in turn, leads to a significant enhancement in the overall quality of the extended reality encounter.

Throughout the present disclosure, the term *"audio fidelity"* refers to the reconstruction of audio by maintaining the integrity, accuracy, and reliability of the sound to ensure that the reconstructed audio closely resembles with the original sound. In this regard, the term *"virtual teleconferencing environment"* refers to a computer-generated environment that allows the users to meet and interact virtually to facilitate remote discussions, collaborations, and information sharing as if they were physically present. For example, a user wearing a headset can see his/her virtual representation along with the virtual representation of the other users that are currently present in the virtual teleconferencing environment, thereby allowing the users to share documents, 3D models, and spatialized audio. Such a virtual teleconferencing environment allows an enhanced engagement and interaction of the users with an enhanced immersive and effective teleconferencing experience.

Throughout the present disclosure, the term *"first audio signal"* refers to an electrical signal that represents a sound in the real-world environment that is captured within the first room. The aforesaid recording of the first signal is generally performed by microphones or audio recording devices that are arranged inside the headset. Moreover, the recording of the first audio signal from the first room includes any sounds, speech, or ambient noise present in the first room. The technical effect of recording the first audio signal from the first room is used to analyze the acoustic characteristics, for example, real-time room impulse response estimation that improves the overall audio fidelity of the virtual teleconferencing environment, thereby creating an enhanced immersive user experience.

Optionally, the first audio signal is associated with acoustic presence and absence in the first room.

In this regard, the term *"acoustic presence and absence"* refers to the presence and absence of the first audio signal (i.e., the presence and absence of the voice). In an implementation, the first audio signal is associated with the acoustic presence (i.e., the voice) in the first room. In another implementation, the first audio signal is associated with the acoustic absence (i.e., the voice) in the first room. The first audio signal with acoustic presence and absence is further used to analyze the dynamics of the virtual teleconferencing environment, for example, in distinguishing between speech and background noise. That is further used to improve the accuracy of spatial audio representation to the user.

Optionally, recording the first audio signal is performed using one or more microphones.

Throughout the present disclosure, the term *"microphone"* refers to a specialized equipment that is capable of sensing and converting the sounds in the real-world environment into the first audio signal. It will be appreciated that the sounds in the real-world environment are generated by at least one sound source present in the real-world environment. The at least one sound source could be located in the vicinity of the plurality of microphones or be located at a considerable distance from the plurality of microphones, in the first room. In an implementation, recording the first audio signal is performed using one microphone. In another implementation, recording the first audio signal is performed using two microphones. Optionally, the plurality of microphones are arranged (namely, mounted) on a device present in the first room. In some implementations, said device is arranged at a fixed location within the first room. In such implementation, the said device is stationary within the first room. In other implementations, the said device is a wearable device being worn by a given user present in the first room. In such implementations, the location of said device (and, therefore, the location of a given microphone arranged on said device) changes with a change in the location of the given user. As an example, the device could be arranged on a support structure that is capable of a three-dimensional (3D) rotation (and, additionally, capable of a translation motion). The support structure could be moved to any required location in the first room. Beneficially, in this case, the given microphone (arranged on said device) is movable in the first room to be able to capture the sounds of the user from different positions and/or different directions in the first room.

Examples of the device include, but are not limited to, a head-mounted display (HMD) apparatus. The term *"head-mounted display"* apparatus refers to a specialized equipment that is configured to present an extended-reality (XR) environment to a given user when said HMD apparatus, in operation, is worn by the given user on his/her head. The HMD apparatus is implemented, for example, as an XR headset, a pair of XR glasses, and the like, that is operable to display a scene of the XR environment to the given user. The term *"extended-reality"* encompasses virtual reality (VR), augmented reality (AR), mixed reality (MR), and the like.

Throughout the present disclosure, the term *"room impulse response (RIR) analysis"* refers to the analysis of various characteristics that are used to distinguish and identify the at least one of the direct sound component, early reflections component, and late reverberation component of the recorded first audio signal in the first room. For example, the user speaks in the first room. In that case, the RIR analysis is performed to determine the direct sound, which is the voice of the user, along with the subsequent reflections and the late reverberation as the sound bounces around the first room. The direct sound component provides information about the initial sound source, early reflections help define the room's geometry, and late reverberation contributes to a sense of space. Therefore, the technical effect of performing RIR analysis for the first room using the first audio signal to determine at least one of a direct sound component, an early reflections component and a late reverberation component is used to distinguish between different aspects of the acoustic response that can be further used to recreate an enhanced, accurate, and immersive virtual teleconferencing environment. As a result, the overall quality of the audio experience in applications like virtual teleconferencing is enhanced.

Optionally, performing RIR analysis comprises a plurality of RIR analyses performed in real-time and in a periodic manner to periodically update the determined direct sound component, early reflections component and late reverberation component.

The plurality of RIR analyses are performed continuously in real-time and in a periodic manner to update the determined direct sound component, early reflections component and late reverberation component to account for dynamic changes in the virtual teleconferencing environment. The technical effect of performing RIR analysis comprises a plurality of RIR analyses performed in real-time and in a periodic manner to provide users with a consistently realistic and immersive audio experience, particularly in applications like virtual teleconferencing.

Performing RIR analysis comprises a plurality of RIR analyses performed in real-time to collate RIR component measurements for determining the direct sound component, the early reflections component and the late reverberation component therefrom.

In this regard, the term *"plurality of RIR analyses"* includes conducting multiple analyses in real-time, creating a series of measurements for various components such as the direct sound, early reflections, and late reverberation. The plurality of RIR analyses is performed to collect a set of components for different RIR components, such as the direct sound component, the early reflections component, and the late reverberation component, that are further collated to comprehensively understand the acoustic characteristics of the first room in a continuous manner. Thus, the acoustic characteristics that may change rapidly due to the movement of the users, changes in furniture arrangement, or other dynamic factors can be recorded. Therefore, the technical effect of performing the plurality of RIR analyses in real-time is to gain a more nuanced understanding of the direct sound, early reflections, and late reverberation components that can be further used to provide a responsive and accurate spatial audio representation, ensuring that virtual teleconferencing environments deliver a realistic and immersive auditory experience that adapts to changes in the first room.

Throughout the present disclosure, the term *"at least the late reverberation component"* refers to the sustained echoes or reflections of sound that persist in the virtual teleconferencing environment after the initial direct sound and early reflections. For example, the user speaks in the first room, and then, in that case, the sound interacts with surfaces such as walls, ceilings, and floors, creating reflections that contribute to the overall reverberation. The at least the late reverberation component is extracted to create a realistic and immersive audio experience, such as by adding a depth and a sense of spatial presence to the sound, contributing to the perception of being in the physical environment of the first room to the other users. The technical effect of extracting the at least the late reverberation component is used to manipulate and reproduce the acoustic response, thereby providing an enhanced authentic virtual representation of the virtual environment, especially in applications like virtual teleconferencing, where a natural and immersive audio experience enhances the overall quality of communication.

Furthermore, the recording of the second audio signal from the second room physically spaced apart from the first room includes the recording of the second audio signal (i.e., the audio present in the second room) that is present in the second room. In an implementation, one or more microphones can be placed in the second room to record the second audio signal. Moreover, the second room is physically separated or is located at a certain distance from the first room. The second audio signal is recorded to gather audio data from the second room that can be used for a comprehensive understanding of multiple acoustic environments. The technical effect of recording the second audio signal from the second room, which is physically separated from the first room, facilitates the realistic spatial audio, contributing to an immersive experience, particularly in applications where users may be virtually present in different rooms or locations simultaneously.

Throughout the present disclosure, the term *"de-reverberating the second audio signal"* refers to a process of removing the reverberation (i.e., echoes or sound reflections) from the recorded second audio signal in the second room in order to obtain a clear and direct representation of the original audio by minimizing the impact of the acoustics of the second room. The technical effect of de-reverberating the second audio signal is to distinguish and separate the direct sound from the reverberant components in the second audio signal to provide an improved precise and clear sound reproduction of the corresponding user who is physically present in the second room.

Throughout the present disclosure, the term *"convolving the de-reverberated second audio signal"* refers to a mathematical operation that blends the characteristics of the de-reverberated second signal with the late reverberation component from the first signal to form a third audio signal. In this regard, the term *"third audio signal"* refers to an electrical signal that represents a sound in the real-world environment that is formed to enhance the audio fidelity of the second audio signal by replicating the acoustic characteristics of the first room. Such convolution is used to replicate the acoustic characteristics of the first room in the second room. By introducing the late reverberation component from the first room, the third audio signal enhances the audio fidelity of the second audio signal, making it sound as if it were recorded in the first room. In an implementation, a spatialising technique can be used to enhance the perception of the audio, such as by allowing the convolution with head-related transfer functions that allows an enhanced immersive and realistic experience. The head-related transfer functions are used to determine the way sound interacts with the human head and ears. These head-related transfer functions required to mimic the natural cues of the ears to locate the sound source. The technical effect of convolving the de-reverberated second audio signal with at least the late reverberation component of the first audio signal to form a third audio signal is to provide an enhanced immersive and realistic audio experience, especially in applications like virtual teleconferencing, such as by capturing the essence of the original acoustic environment, providing enhanced audio fidelity in the second room.

Furthermore, playing the third audio signal in the first room and abstaining from playing in the second room refers to the broadcasting of the synthesized audio, which combines the de-reverberated second audio signal with the late reverberation from the first room within the physical space of the first room. Moreover, the virtual teleconferencing environment is generated based on the first room to act as an audio source for the second audio signal. By playing the enhanced audio in the first room, users in that physical space experience the synthesized sound as if it were originating from the physical environment of the second room. The technical effect of abstaining from playing the audio in the second room is used to ensure that the user in different physical locations experiences an audio environment consistent with the acoustics of the first room, contributing to a cohesive and natural teleconferencing experience.

Optionally, the method further comprising
extracting the early reflections component from the determined RIR components and
convolving the de-reverberated second audio signal with the early reflections component of the first audio signal to form the third audio signal.

In this regard, the term *"early reflections component"* refers to initial sound reflections that occur shortly after the direct sound, typically bouncing off surfaces in the physical environment. For example, in the second room with reflective surfaces, the early reflections component includes the initial reflections of a sound, such as a handclap, as it bounces off walls, ceilings, and floors. The extraction of the early reflections component provides a separate representation of the initial reflections, which can be used to enhance specific aspects of the audio experience. The technical effect of extracting the early reflections component from the determined RIR components and convolving the de-reverberated second audio signal with the early reflections component of the first audio signal to form the third audio signal is used to enhance spatial realism and contribute to a more immersive virtual audio experience, particularly in applications like virtual teleconferencing.

The present disclosure also relates to the method as described above. Various embodiments and variants disclosed above, with respect to the aforementioned system, apply *mutatis mutandis* to the method.

In this regard, the term *"processor"* refers to a processor that is configured to control an overall operation of the plurality of headsets and to implement the processing steps. Examples of implementation of the processor may include, but are not limited to, a central data processing device, a microprocessor, a microcontroller, a complex instruction set computing (CISC) processor, an application-specific integrated circuit (ASIC) processor, a reduced instruction set (RISC) processor, a very long instruction word (VLIW) processor, a state machine, and other processors or control circuitry. The processor is communicably coupled to the plurality of headset.

Optionally, the first audio signal is associated with acoustic presence and absence in the first room.

Optionally, each of the plurality of headsets comprises one or more microphones, wherein the first audio signal is recorded using the one or more microphones of the first headset.

Optionally, the processor is configured to perform a plurality of RIR analyses in real-time and in a periodic manner to periodically update the determined direct sound component, early reflections component and late reverberation component.

The processor is configured to perform a plurality of RIR analyses in real time to collate RIR component measurements for determining the direct sound component, early reflections component and late reverberation component.

Optionally, the processor is further configured to
extract the early reflections component from the determined RIR components, and
convolve the de-reverberated second audio signal with the early reflections component of the first audio signal to form the third audio signal.

### DETAILED DESCRIPTION OF THE DRAWINGS

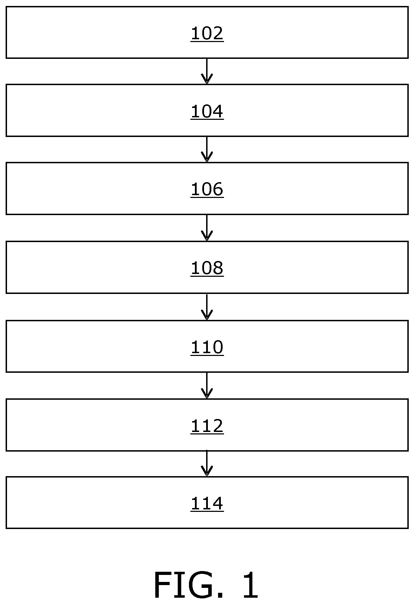

Referring to FIG. 1, illustrated are steps of a method for enhancing audio fidelity in a virtual teleconferencing environment, in accordance with an embodiment of the present disclosure. At step **102,** a first audio signal is recorded from a first room. At step **104,** a room impulse response (RIR) analysis is performed for the first room using the first audio signal to determine at least one of a direct sound component, an early reflections component and a late reverberation component. At step **106,** at least the late reverberation component is extracted from the determined RIR component. At step **108,** a second audio signal is recorded from a second room physically spaced apart from the first room. At step **110,** the second audio signal is de-reverberated to remove reverberation from the second audio signal. At step **112,** the de-reverberated second audio signal is convolved with at least the late reverberation component of the first audio signal to form a third audio signal. Moreover, the third audio signal enhances the audio fidelity of the second audio signal by replicating the acoustic characteristics of the first room. At step **114,** the third audio signal is played in the first room and abstain from playing in the second room. Moreover, the virtual teleconferencing environment is generated based on the first room to act as an audio source for the second audio signal.

The aforementioned steps are only illustrative, and other alternatives can also be provided where one or more steps are added, one or more steps are removed, or one or more steps are provided in a different sequence without departing from the scope of the claims.

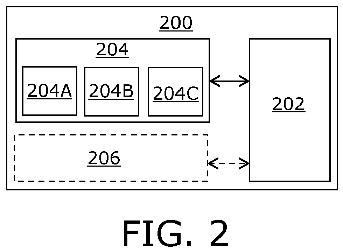

Referring to FIG. 2, illustrated is a block diagram of an architecture of a system **200** for enhancing audio fidelity in a virtual teleconferencing environment, in accordance with an embodiment of the present disclosure. The system **200** comprises a processor **202.** The processor **202** is communicably coupled to a plurality of headset **204** (for example, in this case, depicted as headset **204A, 204B,** and **204C).** The processor **202** is configured to perform various operations, as described earlier, with respect to the aforementioned first aspect.

It may be understood by a person skilled in the art that FIG. 2 includes a simplified architecture of the system **200** for the sake of brevity and clarity, which should not unduly limit the scope of the claims herein. It is to be understood that the specific implementation of the system **200** is provided as an example and is not to be construed as limiting it to specific numbers or types of servers, display apparatuses, and congestion control network devices. The person skilled in the art will recognize many variations, alternatives, and modifications of embodiments of the present disclosure.

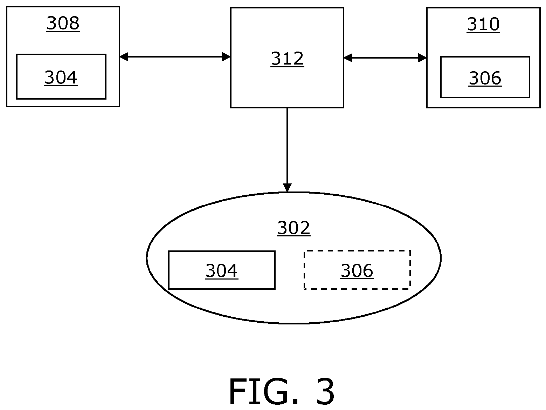

Referring to FIG. 3, illustrated is an exemplary diagram for enhancing audio fidelity in a virtual teleconferencing environment, in accordance with an embodiment of the present disclosure. In FIG. 3, there is shown an illustration that includes a virtual teleconferencing environment **302,** a first headset **304,** a second headset **306,** a first room **308,** a second room **310,** and a processor **312.**

In an implementation, a first user is physically present in the first room **308,** and a second user is present physically in the second room **310.** Moreover, both the users, that is, the first user and the second user, are wearing headsets. For example, the first user is wearing the first headset **304,** and the second user is wearing the second headset **306.** The first audio signal is recorded from the first room **308,** which includes the recording of the audio from the first user, both when speaking and when silent. Optionally, one or more microphones are configured to record the audio of the first user. Furthermore, the RIR analysis is performed in real-time for the first room **308** to determine at least one of a direct sound component, an early reflections component and a late reverberation component. Furthermore, the at least the late reverberation component is extracted from the determined RIR components and further, a second audio signal from the second room **310** is recorded, such as through the second headset **306.** In addition, the second room **310** is physically spaced apart from the first room **308.** Thereafter, the second audio signal from the second room **310** is recorded, and later the second audio signal is de-reverberated to remove reverberation from the signal audio signal.

After the de-reverberation of the second audio signal, the second audio signal is convoluted with at least the late reverberation component of the first audio signal to form a third audio signal. Moreover, the third audio signal enhances the audio fidelity of the second audio signal by replicating the acoustic characteristics of the first room **308.** After that, the third audio signal in the first room and abstain playing in the second room is played to all the users that are present in the virtual teleconferencing environment. As a result, a highly realistic and immersive audio experience in virtual teleconferencing environments with an improved audio fidelity and a more authentic communication atmosphere is provided to the user.

FIG. 3 is merely an example, which should not unduly limit the scope of the claims herein. A person skilled in the art will recognize many variations, alternatives, and modifications of embodiments of the present disclosure.

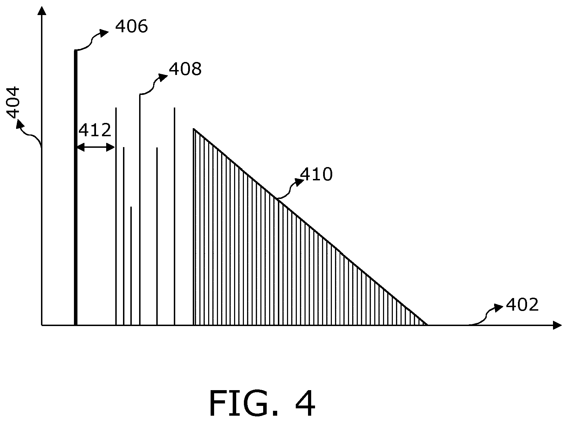

Referring to FIG. 4, illustrated is a graphical illustration depicting the behaviour of the sound, in accordance with an embodiment of the present disclosure. In FIG. 4, there is shown an illustration that includes a time axis **402** that represents how the sound evolves from the direct sound through the early reflections and into the reverberation tail and an amplitude axis **404,** which is measured in decibels (db).

In an exemplary scenario, the graph represents a direct sound component **406,** early reflections component **408,** and the late reverberation component **410.** Moreover, the first line represents the direct sound component **406,** which represents that the sound travels in a straight line from the source to the listener without any reflections. Furthermore, the lines that follow the direct sound represent the early reflections component **408.** The early reflections component **408** represent the sounds that have bounced off surfaces like walls, ceilings, or objects and then reached the listener. The early reflections component **408** are generated immediately after the direct sound component **406** and can greatly affect the perceived character of the sound. An initial time delay **412** represents the gap between the direct sound component **406** and the first reflection, which is used to determine the size of the room and the sense of distance to the sound source. Furthermore, the late reverberation component **410** are generated, represented by the shaded triangle, and extend over time.

After the early reflections component **408,** sound waves continue to reflect off surfaces and scatter around the room, which causes the series of reflections to merge into a continuous decay. The late reverberation component **410** diminishes gradually as the sound energy is absorbed by the room surfaces and the air. As a result, the components are performed RIR analysis for the first room using the first audio signal to determine at least one of the direct sound component **406,** the early reflections component **408** and a late reverberation component **410** for enhancing audio fidelity in a virtual teleconferencing environment.

FIG. 4 is merely an example, which should not unduly limit the scope of the claims herein. A person skilled in the art will recognize many variations, alternatives, and modifications of embodiments of the present disclosure.

## Claims

1. A method for enhancing audio fidelity in a virtual teleconferencing environment (302), the method comprising:
recording, by a microphone, a first audio signal from a first room (308), **characterized in that** the method further comprises:
performing, by a processor (202), room impulse response **,** RIR, analysis for the first room (308) using the first audio signal to determine a direct sound component (406), an early reflections component (408) and a late reverberation component (410), wherein performing RIR analysis comprises a plurality of RIR analyses performed in real time to collate RIR component measurements for determining the direct sound component (406), the early reflections component (408) and the late reverberation component (410) therefrom;
extracting, by the processor (202), at least the late reverberation component from the determined RIR components;
recording, by a microphone, a second audio signal from a second room (310) physically spaced apart from the first room (308);
de-reverberating, by the processor (202), the second audio signal to remove reverberation from the recorded second audio signal in the second room in order to obtain a clear and direct representation of the original audio by minimizing the impact of the acoustics of the second room;
convolving, by the processor (202), the de-reverberated second audio signal with at least the late reverberation component of the first audio signal to form a third audio signal, wherein the third audio signal enhances audio fidelity of the second audio signal by replicating acoustic characteristics of the first room (308); and
playing, by the processor (202), the third audio signal in the first room (308) and abstain playing in the second room (310), wherein the virtual teleconferencing environment is generated based on the first room (308) to act as an audio source for the second audio signal.

2. A method according to claim 1, wherein the first audio signal is associated with acoustic presence and absence in the first room (308), wherein the first audio signal with acoustic presence and absence is further used to analyze the dynamics of the virtual teleconferencing environment.

3. A method according to any of claims 1 or 2, wherein recording the first audio signal is performed using one or more microphones (206).

4. A method according to any of preceding claims, wherein performing RIR analysis comprises a plurality of RIR analyses performed in real-time and in a periodic manner to periodically update the determined direct sound component (406), early reflections component (408) and late reverberation component (410) to account for dynamic changes in the virtual teleconferencing environment.

5. A method according any of preceding claims, further comprising
extracting the early reflections component (408) from the determined RIR components, and
convolving the de-reverberated second audio signal with the early reflections component of the first audio signal to form the third audio signal.

6. A system (200) for enhancing audio fidelity in a virtual teleconferencing environment (302), the system comprising:
a plurality of headsets (204) associated with a plurality of rooms; and
a processor (202, 312) communicably coupled to the plurality of headset (204), the processor (202, 312) configured to:
receive a first audio signal recorded by a first headset (304) of the plurality of headset (204), the first headset (304) associated with a first room (308), **characterized in that** the processor is further configured to:
perform room impulse response**,** RIR, analysis for the first room using the first audio signal to determine a direct sound component (406), an early reflections component (408) and a late reverberation component (410);
perform a plurality of RIR analyses in real time to collate RIR component measurements for determining the direct sound component (406), early reflections component (408) and late reverberation component (410);
extract at least the late reverberation component from the determined RIR components;
receive a second audio signal recorded by a second headset (306) of the plurality of headset, the second headset associated with a second room (310) physically spaced apart from the first room (308);
de-reverberate the second audio signal to remove reverberation from the recorded second audio signal in the second room in order to obtain a clear and direct representation of the original audio by minimizing the impact of the acoustics of the second room;
convolve the de-reverberated second audio signal with at least the late reverberation component of the first audio signal to form a third audio signal, wherein the third audio signal enhances audio fidelity of the second audio signal by replicating acoustic characteristics of the first room (308); and
play the third audio signal in the first room and abstain playing in the second room, wherein the virtual teleconferencing environment is generated based on the first room (308) to act as an audio source for the second audio signal.

7. A system (200) according to claim 6, wherein the first audio signal is associated with acoustic presence and absence in the first room (308), wherein the first audio signal with acoustic presence and absence is further used to analyze the dynamics of the virtual teleconferencing environment.

8. A system (200) according to any of claims 6 or 7, wherein each of the plurality of headset (204) comprises one or more microphones, and wherein the first audio signal is recorded using the one or more microphones of the first headset (304).

9. A system (200) according any of preceding claims 6 to 8, wherein the processor (202, 312) is configured to perform a plurality of RIR analyses in real-time and in a periodic manner to periodically update the determined direct sound component (406), early reflections component (408) and late reverberation component (410) to account for dynamic changes in the virtual teleconferencing environment.

10. A system (200) according any of preceding claims 6 to 9, wherein the processor (202, 312) is further configured to
extract the early reflections component from the determined RIR components, and
convolve the de-reverberated second audio signal with the early reflections component of the first audio signal to form the third audio signal.

## Patentansprüche

1. Verfahren zum Verbessern der Audiowiedergabetreue in einer virtuellen Telekonferenzumgebung (302), das Verfahren umfassend:
Aufzeichnen, durch ein Mikrofon, eines ersten Audiosignals aus einem ersten Raum (308), **dadurch gekennzeichnet, dass** das Verfahren ferner umfasst:
Durchführen, durch einen Prozessor (202), einer Raumimpulsantwortanalyse, RIR-Analyse, für den ersten Raum (308) unter Verwendung des ersten Audiosignals, um eine Direktschallkomponente (406), eine Komponente früher Reflexionen (408) und eine Komponente eines späten Nachhalls (410) zu bestimmen, wobei das Durchführen der RIR-Analyse eine Vielzahl von in Echtzeit durchgeführten RIR-Analysen umfasst, um RIR-Komponenten-Messungen zusammenzutragen, um daraus die Direktschallkomponente (406), die Komponente früher Reflexionen (408) und die Komponente eines späten Nachhalls (410) zu bestimmen;
Extrahieren, durch den Prozessor (202), mindestens der Komponente eines späten Nachhalls aus den bestimmten RIR-Komponenten;
Aufzeichnen, durch ein Mikrofon, eines zweiten Audiosignals aus einem zweiten Raum (310), der physisch von dem ersten Raum (308) beabstandet ist;
Enthallen, durch den Prozessor (202), des zweiten Audiosignals, um Nachhall aus dem aufgezeichneten zweiten Audiosignal im zweiten Raum zu entfernen, um eine klare und direkte Darstellung des Originalaudios durch Minimieren der Auswirkung der Akustik des zweiten Raums zu erhalten;
Falten, durch den Prozessor (202), des enthallten zweiten Audiosignals mit mindestens der Komponente eines späten Nachhalls des ersten Audiosignals, um ein drittes Audiosignal zu bilden, wobei das dritte Audiosignal die Audiowiedergabetreue des zweiten Audiosignals durch Nachbilden akustischer Eigenschaften des ersten Raums (308) verbessert; und
Wiedergeben, durch den Prozessor (202), des dritten Audiosignals in dem ersten Raum (308) und Unterlassen eines Wiedergebens in dem zweiten Raum (310), wobei die virtuelle Telekonferenzumgebung basierend auf dem ersten Raum (308) erzeugt wird, um als eine Audioquelle für das zweite Audiosignal zu dienen.

2. Verfahren nach Anspruch 1, wobei das erste Audiosignal mit akustischer Anwesenheit und Abwesenheit in dem ersten Raum (308) verknüpft ist, wobei das erste Audiosignal mit akustischer Anwesenheit und Abwesenheit ferner verwendet wird, um die Dynamik der virtuellen Telekonferenzumgebung zu analysieren.

3. Verfahren nach einem der Ansprüche 1 oder 2, wobei das Aufzeichnen des ersten Audiosignals unter Verwendung eines Mikrofons oder mehrerer Mikrofone (206) durchgeführt wird.

4. Verfahren nach einem der vorstehenden Ansprüche, wobei das Durchführen der RIR-Analyse eine Vielzahl von RIR-Analysen umfasst, die in Echtzeit und auf periodische Weise durchgeführt werden, um die bestimmte Direktschallkomponente (406), die Komponente früher Reflexionen (408) und die Komponente eines späten Nachhalls (410) periodisch zu aktualisieren, um dynamische Änderungen in der virtuellen Telekonferenzumgebung zu berücksichtigen.

5. Verfahren nach einem der vorstehenden Ansprüche, ferner umfassend
Extrahieren der Komponente früher Reflexionen (408) aus den bestimmten RIR-Komponenten und
Falten des enthallten zweiten Audiosignals mit der Komponente früher Reflexionen des ersten Audiosignals, um das dritte Audiosignal zu bilden.

6. System (200) zum Verbessern der Audiowiedergabetreue in einer virtuellen Telekonferenzumgebung (302), das System umfassend:
eine Vielzahl von Headsets (204), die einer Vielzahl von Räumen zugeordnet sind; und
einen Prozessor (202, 312), der kommunikativ mit der Vielzahl von Headsets (204) gekoppelt ist, wobei der Prozessor (202, 312) konfiguriert ist, um:
ein erstes Audiosignal zu empfangen, das durch ein erstes Headset (304) der Vielzahl von Headsets (204) aufgezeichnet wird, wobei das erste Headset (304) einem ersten Raum (308) zugeordnet ist, **dadurch gekennzeichnet, dass** der Prozessor ferner konfiguriert ist, um:
eine Raumimpulsantwortanalyse, RIR-Analyse, für den ersten Raum unter Verwendung des ersten Audiosignals durchzuführen, um eine Direktschallkomponente (406), eine Komponente früher Reflexionen (408) und eine Komponente eines späten Nachhalls (410) zu bestimmen;
eine Vielzahl von RIR-Analysen in Echtzeit durchzuführen, um RIR-Komponenten-Messungen zum Bestimmen der Direktschallkomponente (406), der Komponente früher Reflexionen (408) und der Komponente eines späten Nachhalls (410) zusammenzutragen;
mindestens die Komponente eines späten Nachhalls aus den bestimmten RIR-Komponenten zu extrahieren;
ein zweites Audiosignal zu empfangen, das durch ein zweites Headset (306) der Vielzahl von Headsets aufgezeichnet wird, wobei das zweite Headset einem zweiten Raum (310) zugeordnet ist, der physisch von dem ersten Raum (308) beabstandet ist;
das zweite Audiosignal zu enthallen, um Nachhall aus dem aufgezeichneten zweiten Audiosignal im zweiten Raum zu entfernen, um eine klare und direkte Darstellung des Originalaudios durch Minimieren der Auswirkung der Akustik des zweiten Raums zu erhalten;
das enthallte zweite Audiosignal mit mindestens der Komponente eines späten Nachhalls des ersten Audiosignals zu falten, um ein drittes Audiosignal zu bilden, wobei das dritte Audiosignal die Audiowiedergabetreue des zweiten Audiosignals durch Nachbilden akustischer Eigenschaften des ersten Raums (308) verbessert; und
das dritte Audiosignal im ersten Raum wiederzugeben und ein Wiedergeben im zweiten Raum zu unterlassen, wobei die virtuelle Telekonferenzumgebung basierend auf dem ersten Raum (308) erzeugt wird, um als eine Audioquelle für das zweite Audiosignal zu dienen.

7. System (200) nach Anspruch 6, wobei das erste Audiosignal mit akustischer Anwesenheit und Abwesenheit in dem ersten Raum (308) verknüpft ist, wobei das erste Audiosignal mit akustischer Anwesenheit und Abwesenheit ferner verwendet wird, um die Dynamik der virtuellen Telekonferenzumgebung zu analysieren.

8. System (200) nach einem der Ansprüche 6 oder 7, wobei jedes der Vielzahl von Headsets (204) ein Mikrofon oder mehrere Mikrofone umfasst und wobei das erste Audiosignal unter Verwendung des einen Mikrofons oder der mehreren Mikrofone des ersten Headsets (304) aufgezeichnet wird.

9. System (200) nach einem der vorstehenden Ansprüche 6 bis 8, wobei der Prozessor (202, 312) konfiguriert ist, um eine Vielzahl von RIR-Analysen in Echtzeit und auf periodische Weise durchzuführen, um die bestimmte Direktschallkomponente (406), die Komponente früher Reflexionen (408) und die Komponente eines späten Nachhalls (410) periodisch zu aktualisieren, um dynamische Änderungen in der virtuellen Telekonferenzumgebung zu berücksichtigen.

10. System (200) nach einem der vorstehenden Ansprüche 6 bis 9, wobei der Prozessor (202, 312) ferner konfiguriert ist, um
die Komponente früher Reflexionen aus den bestimmten RIR-Komponenten zu extrahieren und
das enthallte zweite Audiosignal mit der Komponente früher Reflexionen des ersten Audiosignals zu falten, um das dritte Audiosignal zu bilden.

## Revendications

1. Procédé d'amélioration de la fidélité audio dans un environnement de téléconférence virtuelle (302), le procédé comprenant :
l'enregistrement, par un microphone, d'un premier signal audio provenant d'une première salle (308), **caractérisé en ce que** le procédé comprend en outre :
la réalisation, par un processeur (202), d'une analyse de réponse impulsionnelle de salle, RIR, pour la première salle (308) à l'aide du premier signal audio pour déterminer une composante de son direct (406), une composante de réflexions précoces (408) et une composante de réverbération tardive (410), dans lequel la réalisation d'une analyse RIR comprend une pluralité d'analyses RIR réalisées en temps réel pour recueillir des mesures de composantes RIR afin de déterminer la composante de son direct (406), la composante de réflexions précoces (408) et la composante de réverbération tardive (410) à partir de celles-ci ;
l'extraction, par le processeur (202), d'au moins la composante de réverbération tardive à partir des composantes de RIR déterminées ;
l'enregistrement, par un microphone, d'un deuxième signal audio provenant d'une seconde salle (310) physiquement espacée de la première salle (308) ;
la déréverbération, par le processeur (202), du deuxième signal audio pour supprimer la réverbération du deuxième signal audio enregistré dans la seconde salle afin d'obtenir une représentation claire et directe de l'audio d'origine en minimisant l'impact de l'acoustique de la seconde salle ;
la convolution, par le processeur (202), du deuxième signal audio déréverbéré avec au moins la composante de réverbération tardive du premier signal audio pour former un troisième signal audio, dans lequel le troisième signal audio améliore la fidélité audio du deuxième signal audio en reproduisant les caractéristiques acoustiques de la première salle (308) ; et
la diffusion, par le processeur (202), du troisième signal audio dans la première salle (308) et sans diffusion dans la seconde salle (310), dans lequel l'environnement de téléconférence virtuelle est généré sur la base de la première salle (308) pour agir en tant que source audio pour le deuxième signal audio.

2. Procédé selon la revendication 1, dans lequel le premier signal audio est associé à une présence et une absence acoustiques dans la première salle (308), dans lequel le premier signal audio avec présence et absence acoustiques est en outre utilisé pour analyser la dynamique de l'environnement de téléconférence virtuelle.

3. Procédé selon l'une quelconque des revendications 1 ou 2, dans lequel l'enregistrement du premier signal audio est réalisé à l'aide d'un ou plusieurs microphones (206).

4. Procédé selon l'une quelconque des revendications précédentes, dans lequel la réalisation d'une analyse RIR comprend une pluralité d'analyses RIR réalisées en temps réel et de manière périodique pour mettre à jour périodiquement la composante de son direct (406), la composante de réflexions précoces (408) et la composante de réverbération tardive (410) déterminées afin de tenir compte des changements dynamiques dans l'environnement de téléconférence virtuelle.

5. Procédé selon l'une quelconque des revendications précédentes, comprenant en outre
l'extraction de la composante de réflexions précoces (408) à partir des composantes RIR déterminées, et
la convolution du deuxième signal audio déréverbéré avec la composante de réflexions précoces du premier signal audio pour former le troisième signal audio.

6. Système (200) pour améliorer la fidélité audio dans un environnement de téléconférence virtuelle (302), le système comprenant :
une pluralité de casques (204) associés à une pluralité de salles ; et
un processeur (202, 312) couplé par communication à la pluralité de casques (204), le processeur (202, 312) étant configuré pour :
recevoir un premier signal audio enregistré par un premier casque (304) de la pluralité de casques (204), le premier casque (304) étant associé à une première salle (308), **caractérisé en ce que** le processeur est en outre configuré pour :
réaliser une analyse de réponse impulsionnelle de salle, RIR, pour la première salle à l'aide du premier signal audio pour déterminer une composante de son direct (406), une composante de réflexions précoces (408) et une composante de réverbération tardive (410) ;
réaliser une pluralité d'analyses RIR en temps réel pour recueillir des mesures de composantes RIR afin de déterminer la composante de son direct (406), la composante de réflexions précoces (408) et la composante de réverbération tardive (410) ;
extraire au moins la composante de réverbération tardive des composantes RIR déterminées ;
recevoir un deuxième signal audio enregistré par un second casque (306) de la pluralité de casques, le second casque étant associé à une seconde salle (310) physiquement espacée de la première salle (308) ;
déréverbérer le deuxième signal audio pour supprimer la réverbération du deuxième signal audio enregistré dans la seconde salle afin d'obtenir une représentation claire et directe de l'audio d'origine en minimisant l'impact de l'acoustique de la seconde salle ;
réaliser la convolution du deuxième signal audio déréverbéré avec au moins la composante de réverbération tardive du premier signal audio pour former un troisième signal audio, dans lequel le troisième signal audio améliore la fidélité audio du deuxième signal audio en reproduisant les caractéristiques acoustiques de la première salle (308) ; et
diffuser le troisième signal audio dans la première salle et s'abstenir de le diffuser dans la seconde salle, dans lequel l'environnement de téléconférence virtuelle est généré sur la base de la première salle (308) pour agir en tant que source audio pour le deuxième signal audio.

7. Système (200) selon la revendication 6, dans lequel le premier signal audio est associé à une présence et une absence acoustiques dans la première salle (308), dans lequel le premier signal audio avec présence et absence acoustiques est en outre utilisé pour analyser la dynamique de l'environnement de téléconférence virtuelle.

8. Système (200) selon l'une quelconque des revendications 6 ou 7, dans lequel chacun de la pluralité de casques (204) comprend un ou plusieurs microphones, et dans lequel le premier signal audio est enregistré à l'aide du ou des microphones du premier casque (304).

9. Système (200) selon l'une quelconque des revendications 6 à 8 précédentes, dans lequel le processeur (202, 312) est configuré pour réaliser une pluralité d'analyses RIR en temps réel et de manière périodique pour mettre à jour périodiquement la composante de son direct (406), la composante de réflexions précoces (408) et la composante de réverbération tardive (410) déterminées pour tenir compte des changements dynamiques dans l'environnement de téléconférence virtuelle.

10. Système (200) selon l'une quelconque des revendications 6 à 9 précédentes, dans lequel le processeur (202, 312) est configuré pour
extraire la composante de réflexions précoces à partir des composantes de RIR déterminées, et
réaliser la convolution du deuxième signal audio déréverbéré avec la composante de réflexions précoces du premier signal audio pour former le troisième signal audio.
